# EUROPÄISCHE PATENTSCHRIFT

(11) **EP 3 895 938 B1**
(45) Veröffentlichungstag und Bekanntmachung des Hinweises auf die Patenterteilung: **24.01.2024**
(21) Anmeldenummer: 20170137.2
(22) Anmeldetag: 17.04.2020
(51) Int. Cl.: B60Q 5/00

(54) **KRAFTFAHRZEUG ZUR AKUSTISCHEN FAHRTRICHTUNGSANZEIGE**
VEHICLE FOR INDICATING THE DIRECTION OF TRAVEL OF A VEHICLE
VÉHICULE AUTOMOBILE D'INDICATION ACOUSTIQUE DE DIRECTION

(43) Veröffentlichungstag der Anmeldung: 20.10.2021
(73) Patentinhaber: ZKW Group GmbH, 3250 Wieselburg (AT)
(72) Erfinder: Brunnflicker, Andreas, 3250 Wieselburg (AT)
(74) Vertreter: Patentanwaltskanzlei Matschnig & Forsthuber OG

(56) Entgegenhaltungen:
- DE-A1-102011 056 784
- US-A1- 2011 093 149
- US-A1- 2011 199 199
- US-A1- 2014 363 019
- US-B1- 10 315 563

## Beschreibung

Die Erfindung betrifft ein Kraftfahrzeug zur akustischen Fahrtrichtungsanzeige.

Im Straßenverkehr wird durch immer leiser werdende Kraftfahrzeuge, beispielsweise Elektroautos, das Erkennen solcher Kraftfahrzeuge im alltäglichen Straßenverkehr für beispielsweise Fußgänger oder Radfahrer immer schwieriger.

Um Gefahrensituationen zu vermeiden, beispielsweise beim Rechtsabbiegen eines Kraftfahrzeuges im Rechtsverkehr, sind üblicherweise optische Blinker vorgesehen, die jedoch bei blinden Personen nicht wahrgenommen werden können.

Die US 2011/199199 A1, die DE 10 2011 056784 A1, die US 10 315 563 B1, die US 2014/363019 A1 und die US 2011/093149 zeigen Kraftfahrzeuge mit akustischen Vorrichtungen aus dem Stand der Technik.

Es ist eine Aufgabe der Erfindung ein verbessertes Kraftfahrzeug bereitzustellen.

Diese Aufgabe wird durch die Merkmale des Anspruchs 1 gelöst.

Als Ansteuerdaten sind beispielsweise Zustände von Bedienelementen, beispielsweise Lichtschalter, und/oder Sensoren zu verstehen. Die Ansteuerdaten enthalten Informationen darüber, in welche Richtung - links oder rechts - ein Fahrer beabsichtigt zu fahren. Erfindungsgemäß geschieht dies durch Einsatz des in einem Kraftfahrzeug vorhandenen Blinkers, der entsprechend vor der jeweiligen Fahrtrichtungsänderung vom Fahrer aktiviert wird bzw. werden sollte. Dadurch wird beispielsweise ein Signal in Form von Ansteuerdaten an die Steuerungseinrichtung übermittelt.

Als Lautsprechereinheit sind beispielsweise Lautsprecher zu verstehen, die mit Piezoelementen ausgestattet sind, Bändchen-Lautsprecher und/oder Lautsprecher mit Magneten und Spulen.

Unter dem Begriff "Lautstärke" ist ein an den Lautsprechereinheiten einstellbarer Lautstärkepegel gemeint bzw. der Schalldruckpegel, welcher in Dezibel gemessen wird.

Das zumindest eine akustische Signal kann ein gleichbleibendes Geräusch bzw. Ton sein, beispielsweise in einem Frequenzbereich von 10000 bis 18000 kHz, vorzugsweise in einem Bereich von 15000 bis 18000 kHz, insbesondere eine Frequenz von 18000 kHz aufweisen.

Töne in diesen Bereichen sind für das menschliche Gehör besser zu lokalisieren als tiefere Töne mit einer niedrigeren Frequenz. Überdies kann das zumindest eine akustische Signal auch Sprache und/oder eine Signalabfolge umfassen.Es kann vorgesehen sein, dass die erste Endlautstärke kleiner oder gleich der zweiten Startlautstärke ist, wobei vorzugsweise die erste Endlautstärke gleich Null ist.

Es kann vorgesehen sein, dass die erste Startlautstärke kleiner oder gleich der zweiten Endlautstärke ist.

Es kann vorgesehen sein, dass der erste und der zweite Scheinwerfer jeweils als ein Frontscheinwerfer des Kraftfahrzeuges ausgebildet ist.

Es kann vorgesehen sein, dass der erste und der zweite Scheinwerfer jeweils als ein Heckscheinwerfer des Kraftfahrzeuges ausgebildet ist.

Es kann vorgesehen sein, dass der erste Scheinwerfer als ein Frontscheinwerfer des Kraftfahrzeuges ausgebildet ist, wobei der zweite Scheinwerfer als ein Heckscheinwerfer des Kraftfahrzeuges ausgebildet ist.

Es kann vorgesehen sein, dass das Kraftfahrzeug einen dritten Scheinwerfer umfasst, welcher dritte Scheinwerfer zumindest eine dritte Lautsprechereinheit zur Ausgabe von akustischen Signalen umfasst, wobei die dritte Lautsprechereinheit in dem dritten Scheinwerfer integriert ist.

Es kann vorgesehen sein, dass in der Steuerungseinrichtung eine dritte und eine vierte Sequenz gespeichert ist,
wobei die Steuerungseinrichtung die Lautsprechereinheiten bei Ablauf der dritten Sequenz derart ansteuert, dass zur Ausgabe des zumindest einen akustischen Signals die erste Lautsprechereinheit beginnend mit einer festlegbaren ersten Startlautstärke die Lautstärke in einer ersten Zeitdauer hin zu einer festlegbaren ersten Endlautstärke reduziert, wobei die zweite Lautsprechereinheit beginnend bei einer festlegbaren zweiten Startlautstärke die Lautstärke in einer zweiten Zeitdauer hin zu einer festlegbaren ersten Zwischenlautstärke erhöht und unmittelbar nach Erreichen der ersten Zwischenlautstärke die Lautstärke über eine dritte Zeitdauer auf eine festlegbare zweite Endlautstärke reduziert, und wobei die dritte Lautsprechereinheit beginnend bei einer festlegbaren dritten Startlautstärke die Lautstärke in einer viert Zeitdauer hin zu einer festlegbaren dritten Endlautstärke erhöht, wenn die zweite Lautsprechereinheit die erste Zwischenlautstärke erreicht,
und wobei die Steuerungseinrichtung die Lautsprechereinheiten bei Ablauf der vierten Sequenz in umgekehrter Reihenfolge zur dritten Sequenz ansteuert.

Es kann vorgesehen sein, dass die erste Zwischenlautstärke größer oder gleich der ersten Startlautstärke ist.

Es kann vorgesehen sein, dass die dritte Endlautstärke größer oder gleich der ersten Startlautstärke ist.

Es kann vorgesehen sein, dass die erste Endlautstärke gleich der zweiten Startlautstärke ist.

Es ist erfindungsgemäß vorgesehen, dass das Kraftfahrzeug zumindest ein Bedienelement umfasst, welches mit der Steuereinrichtung verbunden ist und mit welchem Bedienelement ein Benutzer bei einer definierten Betätigungsart des Bedienelements Ansteuerdaten zur Ausführung einer Sequenz an die Steuereinrichtung übermitteln kann.

Es kann vorgesehen sein, dass das Kraftfahrzeug zumindest eine Sensoreinrichtung umfasst, welche mit der Steuerungseinrichtung verbunden ist und eingerichtet ist, Fußgänger in der Umgebung des Kraftfahrzeuges zu erfassen, wobei die Sensoreinrichtung beim Erfassen eines Fußgängers die Ansteuerdaten zum Ausführen einer Sequenz an die Steuereinrichtung übermittelt.

Es kann vorgesehen sein, dass das Kraftfahrzeug einen vierten Scheinwerfer umfasst, welcher vierte Scheinwerfer zumindest eine vierte Lautsprechereinheit zur Ausgabe von akustischen Signalen umfasst, wobei die vierte Lautsprechereinheit in dem vierten Scheinwerfer integriert ist.

Es kann vorgesehen sein, dass der erste Scheinwerfer zumindest zwei oder mehrere Lautsprechereinheiten umfasst.

Zusätzlich oder alternativ kann vorgesehen sein, dass der zweite Scheinwerfer zumindest zwei oder mehrere Lautsprechereinheiten umfasst.

Zusätzlich oder alternativ kann vorgesehen sein, dass der dritte Scheinwerfer zumindest zwei oder mehrere Lautsprechereinheiten umfasst.

Zusätzlich oder alternativ kann vorgesehen sein, dass der vierte Scheinwerfer zumindest zwei oder mehrere Lautsprechereinheiten umfasst.

Nachfolgend wird die Erfindung anhand von beispielhaften Zeichnungen näher erläutert. Hierbei zeigt
Fig. 1 ein beispielhaftes Kraftfahrzeug von oben mit einem ersten und einem zweiten Frontscheinwerfer, in welchem eine erste bzw. eine zweite Lautsprechereinheit integriert ist, welche Lautsprechereinheiten von einer Steuerungseinrichtung angesteuert werden, welche Steuerungseinrichtung die Lautsprechereinheiten mit einer ersten Sequenz anzusteuern,
Fig. 1A die erste Sequenz in einer Diagrammdarstellung, wobei Lautstärke gegen die Zeit aufgetragen ist,
Fig. 2 das Kraftfahrzeug aus Fig. 1, wobei die Steuereinrichtung die Lautsprechereinheiten mit einer zweiten Sequenz ansteuert,
Fig. 2A die zweite Sequenz in einer Diagrammdarstellung, wobei Lautstärke gegen die Zeit aufgetragen ist,
Fig. 3 ein weiteres beispielhaftes Kraftfahrzeug von oben, wobei der erste Scheinwerfer als Frontscheinwerfer und der zweite Scheinwerfer als Heckscheinwerfer ausgebildet sind, und wobei die Steuerungseinrichtung die entsprechenden Lautsprechereinheiten mit der ersten Sequenz ansteuert,
Fig. 3A die erste Sequenz in einer Diagrammdarstellung, wobei Lautstärke gegen die Zeit aufgetragen ist,
Fig. 4 ein weiteres beispielhaftes Kraftfahrzeug von oben, ähnlich zu Fig. 1, wobei das Kraftfahrzeug einen dritten Scheinwerfer mit einer dritten Lautsprechereinheit umfasst, welcher als Heckscheinwerfer ausgebildet ist, wobei die Steuerungseinrichtung die entsprechenden Lautsprechereinheiten in einer dritten Sequenz ansteuert, und
Fig. 4A die dritte Sequenz in einer Diagrammdarstellung, wobei Lautstärke gegen die Zeit aufgetragen ist.

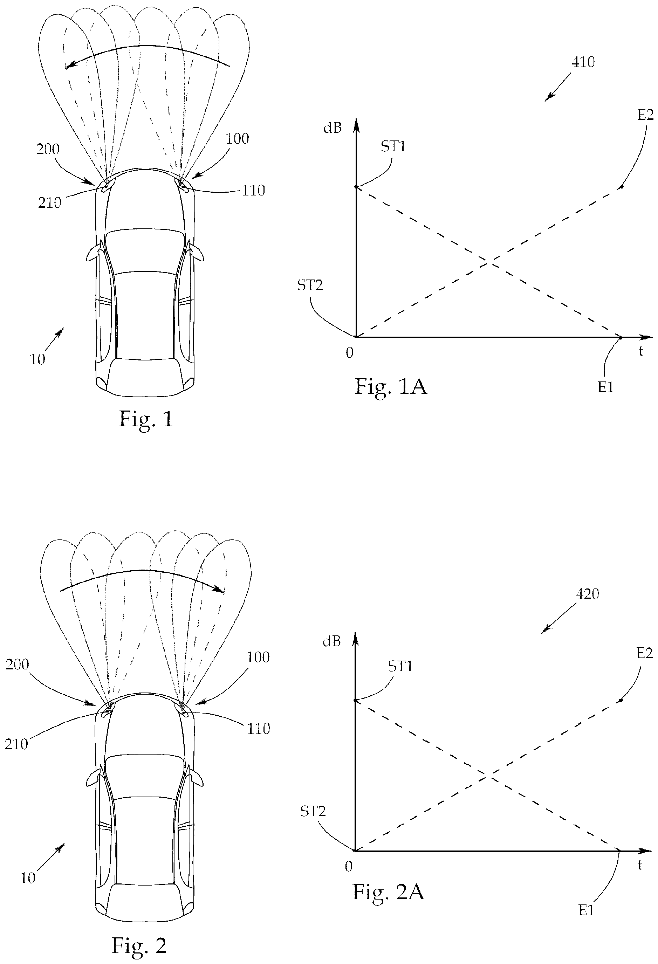

**Fig. 1** zeigt ein beispielhaftes Kraftfahrzeug **10** zur akustischen Fahrtrichtungsanzeige, welches Kraftfahrzeug einen ersten und einen zweiten Scheinwerfer **100, 200** umfasst, wobei der erste Scheinwerfer **100** eine erste Lautsprechereinheit **110** und der zweite Scheinwerfer **200** zumindest eine zweite Lautsprechereinheit **200** zur Ausgabe von akustischen Signalen umfassen, wobei die Lautsprechereinheiten **110, 210** in den jeweiligen Scheinwerfern integriert sind. Im gezeigten Beispiel sind der erste und der zweite Scheinwerfer **100, 200** jeweils als ein Frontscheinwerfer des Kraftfahrzeuges **10** ausgebildet.

Ferner umfasst das Kraftfahrzeug **10** eine Steuerungseinrichtung, welche mit den Lautsprechereinheiten **110, 210** elektrisch verbunden ist, wobei die Steuerungseinrichtung einen Speicher umfasst, in welchem zumindest ein akustisches Signal und Sequenzen zur Ausgabe des zumindest einen akustischen Signals gespeichert sind, und wobei die Steuerungseinrichtung eingerichtet ist, Ansteuerdaten zu empfangen und die Lautsprechereinheiten **110, 210** in Abhängigkeit der Ansteuerdaten mit zumindest einer der Sequenzen anzusteuern, wobei in der Steuerungseinrichtung eine erste Sequenz **410** und eine zweite Sequenz **420** gespeichert ist.

In **Fig. 1** ist der Ablauf der ersten Sequenz **410** gezeigt, wobei in **Fig. 1A** ein dazugehöriges Diagramm dargestellt ist, welchen den zeitlichen Ablauf der ersten Sequenz **410** nochmals verdeutlicht.

Die Steuerungseinrichtung steuert die Lautsprechereinheiten **110, 210** bei Ablauf der ersten Sequenz **410** derart an, dass zur Ausgabe des einen akustischen Signals die erste Lautsprechereinheit **110** beginnend mit einer festlegbaren ersten Startlautstärke **ST1** die Lautstärke in einer ersten Zeitdauer hin zu einer festlegbaren ersten Endlautstärke **E1** reduziert, wobei die zweite Lautsprechereinheit **210** beginnend bei einer festlegbaren zweiten Startlautstärke **ST2** die Lautstärke in einer zweiten Zeitdauer hin zu einer festlegbaren zweiten Endlautstärke **E2** erhöht, wobei sich die erste und die zweite Zeitdauer beim Ablauf der ersten Sequenz **410** überlappen.

Die kegelartigen Segmente vor dem Kraftfahrzeug **10,** sollen den Weg des akustischen Signals von der ersten Lautsprechereinheit **110** zur zweiten Lautsprechereinheit **210** verdeutlichen, wobei ein kegelartiges Segment, welches in die Mitte zwischen den beiden Schweinwerfern gerichtet ist, darstellen soll, dass beide Lautsprechereinheiten zu diesem Zeitpunkt ungefähr die gleiche Lautstärke aufweisen. Aufgrund der wechselnden Lautstärke von einer Lautsprechereinheit zur anderen Lautsprechereinheit wandert das akustische Signal gewissermaßen für einen Hörer, welcher sich beispielsweise außerhalb des Kraftfahrzeuges befindet.

Beim Beispiel in **Fig. 1****,** bei welchem die erste Sequenz abläuft, wird auf ein zukünftiges Abbiegen des Kraftfahrzeuges **10** nach links hingewiesen, da das akustische Signal für einen Hörer von rechts nach links wandert - gesehen von der Darstellung von oben in **Fig. 1** und durch einen Pfeil gekennzeichnet.

Bei Ablauf der zweiten Sequenz **420,** welche am beispielhaften Kraftfahrzeug in **Fig. 2** bzw. im dazugehörigen Diagramm in **Fig. 2A** dargestellt ist, steuert die Steuerungseinrichtung die Lautsprechereinheiten **110, 210** derart an, dass zur Ausgabe des einen akustischen Signals die zweite Lautsprechereinheiten **210** beginnend mit der festlegbaren ersten Startlautstärke **ST1** die Lautstärke in der ersten Zeitdauer hin zu der festlegbaren ersten Endlautstärke **E1** reduziert, wobei die erste Lautsprechereinheit **110** beginnend bei der festlegbaren zweiten Startlautstärke **ST2** die Lautstärke in der zweiten Zeitdauer hin zu der festlegbaren zweiten Endlautstärke **E2** erhöht, wobei sich die erste und die zweite Zeitdauer beim Ablauf der ersten Sequenz überlappen.

Beim Beispiel in **Fig. 2****,** bei welchem die zweite Sequenz abläuft, wird auf ein zukünftiges Abbiegen des Kraftfahrzeuges **10** nach rechts hingewiesen, da das akustische Signal für einen Hörer von links nach rechts wandert - gesehen von der Darstellung von oben in **Fig. 2** und durch einen Pfeil gekennzeichnet.

Wie in den Diagrammen zur ersten Sequenz in **Fig. 1A** und zur zweiten Sequenz in **Fig. 2A** gezeigt ist, ist die erste Startlautstärke **ST1** gleich der zweiten Endlautstärke **E2** und die zweite Startlautstärke **ST2** gleich der ersten Endlautstärke **E1,** wobei die zweite Startlautstärke **ST2** und die erste Endlautstärke **E1** einer Lautstärke von Null entsprechen. Ferner startet die erste und die zweite Startlautstärke **ST1, ST2** zum gleichen Zeitpunkt, wobei die erste Endlautstärke **E1** zur selben Zeit erreicht wird wie die zweite Endlautstärke **E2.**

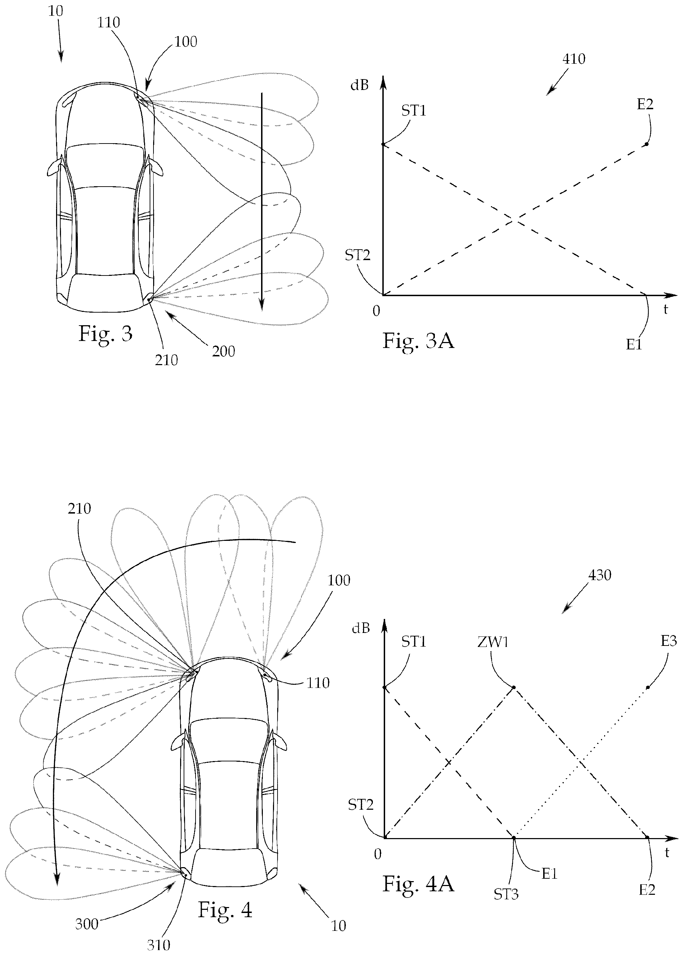

**Fig. 3** zeigt ein weiteres Beispiel eines Kraftfahrzeuges **10,** welches ähnlich zum Beispiel aus **Fig. 1** ist, wobei der erste Scheinwerfer **100** als Frontscheinwerfer und der zweite Scheinwerfer **200** als Heckscheinwerfer des Kraftfahrzeuges **10** ausgebildet sind.

In dem Beispiel aus **Fig. 1** werden die entsprechenden Scheinwerfer **100, 200** bzw. die dazugehörigen Lautsprechereinheiten **110, 210** von der Steuereinrichtung mit der ersten Sequenz **410** angesteuert, welche nochmals in **Fig. 3A** dargestellt ist.

**Fig. 4** zeigt ein weiteres Kraftfahrzeug **10,** welches ähnlich zu den Beispielen aus **Fig. 1** und **Fig. 3** ist, wobei das Kraftfahrzeug **10** einen dritten Scheinwerfer umfasst, welcher im gezeigten Beispiel als Heckscheinwerfer mit einer integrierten dritten Lautsprechereinheit **310** ausgebildet ist, wobei der erste und der zweite Scheinwerfer **100, 200** als Frontscheinwerfer ausgebildet sind. Der dritte Scheinwerfer **300** umfasst eine dritte Lautsprechereinheit **310** zur Ausgabe von akustischen Signalen, wobei die dritte Lautsprechereinheit **310** in dem dritten Scheinwerfer **300** integriert ist.

Im Beispiel in **Fig. 4** ist ferner eine dritte Sequenz **430** und eine vierte Sequenz gespeichert, wobei die Steuerungseinrichtung die Lautsprechereinheiten **110, 210, 310** bei Ablauf der dritten Sequenz **430** derart ansteuert, dass zur Ausgabe des einen akustischen Signals die erste Lautsprechereinheit **110** beginnend mit einer festlegbaren ersten Startlautstärke **ST1** die Lautstärke in einer ersten Zeitdauer hin zu einer festlegbaren ersten Endlautstärke **E1** reduziert, wobei die zweite Lautsprechereinheit **210** beginnend bei einer festlegbaren zweiten Startlautstärke **ST2** die Lautstärke in einer zweiten Zeitdauer hin zu einer festlegbaren ersten Zwischenlautstärke **ZW1** erhöht und unmittelbar nach Erreichen der ersten Zwischenlautstärke **ZW1** die Lautstärke über eine dritte Zeitdauer auf eine festlegbare zweite Endlautstärke **E2** reduziert, und wobei die dritte Lautsprechereinheit **310** beginnend bei einer festlegbaren dritten Startlautstärke **ST3** die Lautstärke in einer viert Zeitdauer hin zu einer festlegbaren dritten Endlautstärke **E3** erhöht, wenn die zweite Lautsprechereinheit **210** die erste Zwischenlautstärke **ZW1** erreicht.

Bei Ablauf der vierten Sequenz steuert die Steuerungseinrichtung die Lautsprechereinheiten **110, 210, 310** in umgekehrter Reihenfolge zur dritten Sequenz **430** an.

Wie im Diagrammen zur dritten Sequenz in **Fig. 4A** gezeigt ist, ist die erste Startlautstärke **ST1** gleich der ersten Zwischenlautstärke **ZW1** und der dritten Endlautstärke **E3,** wobei die zweite Startlautstärke **ST2** gleich der ersten und der zweiten Endlautstärke **E1, E2** sowie der dritten Startlautstärke **ST3** ist, wobei die zweite Startlautstärke **ST2,** die erste und die zweite Endlautstärke **E1, E2** sowie die dritte Startlautstärke **ST3** einer Lautstärke von Null entsprechen. Ferner startet die erste und die zweite Startlautstärke **ST1, ST2** zum gleichen Zeitpunkt, wobei die erste Endlautstärke **E1** zum selben Zeitpunkt erreicht ist wie die erste Zwischenlautstärke **ZW1.** Weiters ist die dritte Endlautstärke **E3** zum selben Zeitpunkt erreicht wie die zweite Endlautstärke **E2.**

## Patentansprüche

1. Kraftfahrzeug (10) zur akustischen Fahrtrichtungsanzeige, welches Kraftfahrzeug Folgendes umfasst:
- einen ersten und einen zweiten Scheinwerfer (100, 200), wobei der erste Scheinwerfer (100) zumindest eine erste Lautsprechereinheit (110) und der zweite Scheinwerfer (200) zumindest eine zweite Lautsprechereinheit (200) zur Ausgabe von akustischen Signalen umfassen, wobei die Lautsprechereinheiten (110, 210) in den jeweiligen Scheinwerfern integriert sind,
- zumindest eine Steuerungseinrichtung, welche mit den Lautsprechereinheiten (110, 210) elektrisch verbunden ist, wobei die Steuerungseinrichtung einen Speicher umfasst, in welchem zumindest ein akustisches Signal und Sequenzen zur Ausgabe des zumindest einen akustischen Signals gespeichert sind, und wobei die Steuerungseinrichtung eingerichtet ist, Ansteuerdaten zu empfangen und die Lautsprechereinheiten (110, 210) in Abhängigkeit der Ansteuerdaten mit zumindest einer der Sequenzen anzusteuern,
wobei in der Steuerungseinrichtung eine erste Sequenz (410) und eine zweite Sequenz (420) gespeichert ist,
wobei die Steuerungseinrichtung die Lautsprechereinheiten (110, 210) bei Ablauf der ersten Sequenz (410) derart ansteuert, dass zur Ausgabe des zumindest einen akustischen Signals die erste Lautsprechereinheit (110) beginnend mit einer festlegbaren ersten Startlautstärke (ST1) die Lautstärke in einer ersten Zeitdauer hin zu einer festlegbaren ersten Endlautstärke (E1) reduziert, wobei die zweite Lautsprechereinheit (210) beginnend bei einer festlegbaren zweiten Startlautstärke (ST2) die Lautstärke in einer zweiten Zeitdauer hin zu einer festlegbaren zweiten Endlautstärke (E2) erhöht, wobei sich die erste und die zweite Zeitdauer beim Ablauf der ersten Sequenz überlappen,
und wobei die Steuerungseinrichtung die Lautsprechereinheiten (110, 210) bei Ablauf der zweiten Sequenz (420) derart ansteuert, dass zur Ausgabe des zumindest einen akustischen Signals die zweite Lautsprechereinheiten (210) beginnend mit der festlegbaren ersten Startlautstärke (ST1) die Lautstärke in der ersten Zeitdauer hin zu der festlegbaren ersten Endlautstärke (E1) reduziert, wobei die erste Lautsprechereinheit (110) beginnend bei der festlegbaren zweiten Startlautstärke (ST2) die Lautstärke in der zweiten Zeitdauer hin zu der festlegbaren zweiten Endlautstärke (E2) erhöht, wobei sich die erste und die zweite Zeitdauer beim Ablauf der ersten Sequenz überlappen,
wobei
das Kraftfahrzeug (10) zumindest ein Bedienelement umfasst, welches mit der Steuereinrichtung verbunden ist und mit welchem Bedienelement ein Benutzer bei einer definierten Betätigungsart des Bedienelements Ansteuerdaten zur Ausführung einer Sequenz an die Steuereinrichtung übermitteln kann, wobei das Bedienelement ein Blinker des Kraftfahrzeuges ist.

2. Kraftfahrzeug nach Anspruch 1, **dadurch gekennzeichnet, dass** die erste Endlautstärke (E1) kleiner oder gleich der zweiten Startlautstärke (ST2) ist, wobei vorzugsweise die erste Endlautstärke (E1) gleich Null ist.

3. Kraftfahrzeug nach Anspruch 1 oder 2, **dadurch gekennzeichnet, dass** die erste Startlautstärke (ST1) kleiner oder gleich der zweiten Endlautstärke (E2) ist.

4. Kraftfahrzeug nach einem der Ansprüche 1 bis 3, **dadurch gekennzeichnet, dass** der erste und der zweite Scheinwerfer (100, 200) jeweils als ein Frontscheinwerfer des Kraftfahrzeuges (10) ausgebildet ist.

5. Kraftfahrzeug nach einem der Ansprüche 1 bis 3, **dadurch gekennzeichnet, dass** der erste und der zweite Scheinwerfer (100, 200) jeweils als ein Heckscheinwerfer des Kraftfahrzeuges (10) ausgebildet ist.

6. Kraftfahrzeug nach einem der Ansprüche 1 bis 3, **dadurch gekennzeichnet, dass** der erste Scheinwerfer (100) als ein Frontscheinwerfer des Kraftfahrzeuges (100) ausgebildet ist, wobei der zweite Scheinwerfer (200) als ein Heckscheinwerfer des Kraftfahrzeuges (10) ausgebildet ist.

7. Kraftfahrzeug nach einem der Ansprüche 1 bis 6, **dadurch gekennzeichnet, dass** das Kraftfahrzeug (10) einen dritten Scheinwerfer (300) umfasst, welcher dritte Scheinwerfer (300) zumindest eine dritte Lautsprechereinheit (310) zur Ausgabe von akustischen Signalen umfasst, wobei die dritte Lautsprechereinheit (310) in dem dritten Scheinwerfer (300) integriert ist.

8. Kraftfahrzeug nach Anspruch 7, **dadurch gekennzeichnet, dass** in der Steuerungseinrichtung eine dritte (430) und eine vierte Sequenz gespeichert ist,
wobei die Steuerungseinrichtung die Lautsprechereinheiten (110, 210, 310) bei Ablauf der dritten Sequenz (430) derart ansteuert, dass zur Ausgabe des zumindest einen akustischen Signals die erste Lautsprechereinheit (110) beginnend mit einer festlegbaren ersten Startlautstärke (ST1) die Lautstärke in einer ersten Zeitdauer hin zu einer festlegbaren ersten Endlautstärke (E1) reduziert, wobei die zweite Lautsprechereinheit (210) beginnend bei einer festlegbaren zweiten Startlautstärke (ST2) die Lautstärke in einer zweiten Zeitdauer hin zu einer festlegbaren ersten Zwischenlautstärke (ZW1) erhöht und unmittelbar nach Erreichen der ersten Zwischenlautstärke (ZW1) die Lautstärke über eine dritte Zeitdauer auf eine festlegbare zweite Endlautstärke (E2) reduziert, und wobei die dritte Lautsprechereinheit (310) beginnend bei einer festlegbaren dritten Startlautstärke (ST3) die Lautstärke in einer viert Zeitdauer hin zu einer festlegbaren dritten Endlautstärke (E3) erhöht, wenn die zweite Lautsprechereinheit (210) die erste Zwischenlautstärke (ZW1) erreicht,
und wobei die Steuerungseinrichtung die Lautsprechereinheiten (110, 210, 310) bei Ablauf der vierten Sequenz in umgekehrter Reihenfolge zur dritten Sequenz (430) ansteuert.

9. Kraftfahrzeug nach Anspruch 8, **dadurch gekennzeichnet, dass** die erste Zwischenlautstärke (ZW1) größer oder gleich der ersten Startlautstärke (ST1) ist.

10. Kraftfahrzeug nach Anspruch 8 oder 9, **dadurch gekennzeichnet, dass** die dritte Endlautstärke (E3) größer oder gleich der ersten Startlautstärke (ST1) ist.

11. Kraftfahrzeug nach einem der Ansprüche 8 bis 10, **dadurch gekennzeichnet, dass** die erste Endlautstärke (E1) gleich der zweiten Startlautstärke (ST2) ist.

12. Kraftfahrzeug nach einem der Ansprüche 1 bis 11, **dadurch gekennzeichnet, dass** das Kraftfahrzeug (10) zumindest eine Sensoreinrichtung umfasst, welche mit der Steuerungseinrichtung verbunden ist und eingerichtet ist, Fußgänger in der Umgebung des Kraftfahrzeuges (10) zu erfassen, wobei die Sensoreinrichtung beim Erfassen eines Fußgängers die Ansteuerdaten zum Ausführen einer Sequenz an die Steuereinrichtung übermittelt.

## Claims

1. Motor vehicle (10) for acoustic direction indication, which motor vehicle comprises the following
- a first and a second headlight (100, 200), wherein the first headlight (100) comprises at least one first loudspeaker unit (110) and the second headlight (200) comprises at least one second loudspeaker unit (200) for outputting acoustic signals, wherein the loudspeaker units (110, 210) are integrated in the respective headlights,
- at least one control device which is electrically connected to the loudspeaker units (110, 210), the control device comprising a memory in which at least one acoustic signal and sequences for outputting the at least one acoustic signal are stored, and the control device being set up to receive control data and to control the loudspeaker units (110, 210) with at least one of the sequences as a function of the control data,
wherein a first sequence (410) and a second sequence (420) are stored in the control device,
the control device controlling the loudspeaker units (110, 210) at the end of the first sequence (410) in such a way that, in order to output the at least one acoustic signal, the first loudspeaker unit (110) reduces the volume in a first period of time from a first starting volume (ST1), which can be fixed, to a first final volume (E1), which can be fixed, wherein the second loudspeaker unit (210), starting at a fixable second start volume (ST2), increases the volume in a second period of time up to a fixable second end volume (E2), wherein the first and second periods of time overlap during the course of the first sequence,
and wherein the control device controls the loudspeaker units (110, 210) at the end of the second sequence (420) in such a way that, in order to output the at least one acoustic signal, the second loudspeaker unit (210) reduces the volume in the first time period, beginning with the first start volume (ST1) which can be fixed, to the first end volume (E1) which can be fixed, wherein the first loudspeaker unit (110), starting at the fixable second start volume (ST2), increases the volume in the second time duration up to the fixable second end volume (E2), wherein the first and the second time duration overlap during the course of the first sequence,
wherein
the motor vehicle (10) comprises at least one control element which is connected to the control device and with which control element a user can transmit control data for executing a sequence to the control device when the control element is actuated in a defined manner, the control element being a turn signal of the motor vehicle.

2. Motor vehicle according to claim 1, **characterized in that** the first end volume (E1) is less than or equal to the second start volume (ST2), the first end volume (E1) preferably being equal to zero.

3. Motor vehicle according to claim 1 or 2, **characterized in that** the first starting volume (ST1) is less than or equal to the second final volume (E2).

4. Motor vehicle according to one of claims 1 to 3, **characterized in that** the first and second headlights (100, 200) are each designed as a front headlight of the motor vehicle (10).

5. Motor vehicle according to one of claims 1 to 3, **characterized in that** the first and the second headlamp (100, 200) are each designed as a rear headlamp of the motor vehicle (10).

6. Motor vehicle according to one of claims 1 to 3, **characterized in that** the first headlamp (100) is designed as a front headlamp of the motor vehicle (100), the second headlamp (200) being designed as a rear headlamp of the motor vehicle (10).

7. Motor vehicle according to one of claims 1 to 6, **characterized in that** the motor vehicle (10) comprises a third headlamp (300), which third headlamp (300) comprises at least one third loudspeaker unit (310) for emitting acoustic signals, the third loudspeaker unit (310) being integrated in the third headlamp (300).

8. Motor vehicle according to claim 7, **characterized in that** a third (430) and a fourth sequence are stored in the control device,
wherein the control device controls the loudspeaker units (110, 210, 310) at the end of the third sequence (430) in such a way that, in order to output the at least one acoustic signal, the first loudspeaker unit (110), starting at a first starting volume (ST1) which can be fixed, reduces the volume in a first period of time to a first final volume (E1) which can be fixed, wherein the second loudspeaker unit (210), starting at a fixable second starting volume (ST2), increases the volume in a second period of time to a fixable first intermediate volume (ZW1) and, immediately after reaching the first intermediate volume (ZW1), reduces the volume over a third period of time to a fixable second final volume (E2), and wherein the third loudspeaker unit (310), starting at a determinable third starting volume (ST3), increases the volume over a fourth period of time to a determinable third final volume (E3) when the second loudspeaker unit (210) reaches the first intermediate volume (ZW1),
and wherein the control device controls the loudspeaker units (110, 210, 310) in reverse order to the third sequence (430) at the end of the fourth sequence.

9. Motor vehicle according to claim 8, **characterized in that** the first intermediate volume (ZW1) is greater than or equal to the first starting volume (ST1).

10. Motor vehicle according to claim 8 or 9, **characterized in that** the third final volume (E3) is greater than or equal to the first starting volume (ST1).

11. Motor vehicle according to one of claims 8 to 10, **characterized in that** the first final volume (E1) is equal to the second starting volume (ST2).

12. Motor vehicle according to one of claims 1 to 11, **characterized in that** the motor vehicle (10) comprises at least one sensor device which is connected to the control device and is set up to detect pedestrians in the vicinity of the motor vehicle (10), the sensor device transmitting the control data for executing a sequence to the control device when a pedestrian is detected.

## Revendications

1. Véhicule automobile (10) pour l'indication acoustique de la direction, lequel véhicule automobile comprend ce qui suit :
- un premier et un deuxième projecteur (100, 200), le premier projecteur (100) comprenant au moins une première unité de haut-parleur (110) et le deuxième projecteur (200) comprenant au moins une deuxième unité de haut-parleur (200) pour émettre des signaux acoustiques, les unités de haut-parleur (110, 210) étant intégrées dans les projecteurs respectifs,
- au moins un dispositif de commande qui est relié électriquement aux unités de haut-parleurs (110, 210), le dispositif de commande comprenant une mémoire dans laquelle sont enregistrés au moins un signal acoustique et des séquences pour l'émission de l'au moins un signal acoustique, et le dispositif de commande étant conçu pour recevoir des données de commande et pour commander les unités de haut-parleurs (110, 210) en fonction des données de commande avec au moins l'une des séquences,
une première séquence (410) et une deuxième séquence (420) étant mémorisées dans le dispositif de commande,
le dispositif de commande commandant les unités de haut-parleurs (110, 210) lors du déroulement de la première séquence (410) de telle sorte que, pour l'émission de l'au moins un signal acoustique, la première unité de haut-parleurs (110), en commençant par un premier volume de départ (ST1) pouvant être fixé, réduit le volume dans une première durée jusqu'à un premier volume final (E1) pouvant être fixé, la deuxième unité de haut-parleur (210) augmente le volume dans une deuxième période de temps jusqu'à un deuxième volume final (E2) pouvant être fixé, en commençant à un deuxième volume de départ (ST2) pouvant être fixé, la première et la deuxième périodes de temps se chevauchant lors du déroulement de la première séquence,
et le dispositif de commande commandant les unités de haut-parleurs (110, 210) lors de l'écoulement de la deuxième séquence (420) de telle sorte que, pour l'émission de l'au moins un signal acoustique, la deuxième unité de haut-parleurs (210) réduit le volume sonore dans la première durée jusqu'au premier volume sonore final (E1) pouvant être fixé, en commençant par le premier volume sonore de départ (ST1) pouvant être fixé, la première unité de haut-parleurs (110) augmente le volume dans la deuxième période de temps jusqu'au deuxième volume final (E2) pouvant être fixé en commençant par le deuxième volume de départ (ST2) pouvant être fixé, la première et la deuxième périodes de temps se chevauchant lors du déroulement de la première séquence,
dans lequel
le véhicule automobile (10) comprend au moins un élément de commande qui est relié au dispositif de commande et avec lequel élément de commande un utilisateur peut transmettre au dispositif de commande, pour un mode d'actionnement défini de l'élément de commande, des données de commande pour l'exécution d'une séquence, l'élément de commande étant un clignotant du véhicule automobile.

2. Véhicule automobile selon la revendication 1, **caractérisé en ce que** le premier volume sonore final (E1) est inférieur ou égal au deuxième volume sonore de départ (ST2), le premier volume sonore final (E1) étant de préférence égal à zéro.

3. Véhicule automobile selon la revendication 1 ou 2, **caractérisé en ce que** le premier volume sonore de départ (ST1) est inférieur ou égal au deuxième volume sonore final (E2).

4. Véhicule automobile selon l'une des revendications 1 à 3, **caractérisé en ce que** le premier et le deuxième projecteur (100, 200) sont chacun conçus comme un projecteur avant du véhicule automobile (10).

5. Véhicule automobile selon l'une des revendications 1 à 3, **caractérisé en ce que** le premier et le deuxième projecteur (100, 200) sont chacun configurés comme un projecteur arrière du véhicule automobile (10).

6. Véhicule automobile selon l'une des revendications 1 à 3, **caractérisé en ce que** le premier projecteur (100) est configuré comme un projecteur avant du véhicule automobile (100), le deuxième projecteur (200) étant configuré comme un projecteur arrière du véhicule automobile (10).

7. Véhicule automobile selon l'une des revendications 1 à 6, **caractérisé en ce que** le véhicule automobile (10) comprend un troisième projecteur (300), lequel troisième projecteur (300) comprend au moins une troisième unité de haut-parleur (310) pour émettre des signaux acoustiques, la troisième unité de haut-parleur (310) étant intégrée dans le troisième projecteur (300).

8. Véhicule automobile selon la revendication 7, **caractérisé en ce qu'**une troisième (430) et une quatrième séquence sont mémorisées dans le dispositif de commande,
le dispositif de commande commandant les unités de haut-parleurs (110, 210, 310) à l'expiration de la troisième séquence (430) de telle sorte que, pour l'émission de l'au moins un signal acoustique, la première unité de haut-parleurs (110), en commençant par un premier volume de départ (ST1) pouvant être fixé, réduit le volume dans une première durée jusqu'à un premier volume final (E1) pouvant être fixé, la deuxième unité de haut-parleur (210) augmentant le volume sonore dans une deuxième durée jusqu'à un premier volume sonore intermédiaire (ZW1) pouvant être fixé, en commençant à un deuxième volume sonore de départ (ST2) pouvant être fixé, et réduisant le volume sonore sur une troisième durée jusqu'à un deuxième volume sonore final (E2) pouvant être fixé, immédiatement après avoir atteint le premier volume sonore intermédiaire (ZW1), et dans lequel la troisième unité de haut-parleur (310), en commençant à un troisième volume de départ (ST3) pouvant être fixé, augmente le volume dans une quatrième période de temps jusqu'à un troisième volume final (E3) pouvant être fixé, lorsque la deuxième unité de haut-parleur (210) atteint le premier volume intermédiaire (ZW1),
et dans lequel le dispositif de commande commande les unités de haut-parleurs (110, 210, 310) à l'expiration de la quatrième séquence dans l'ordre inverse de la troisième séquence (430).

9. Véhicule automobile selon la revendication 8, **caractérisé en ce que** le premier volume sonore intermédiaire (ZW1) est supérieur ou égal au premier volume sonore de départ (ST1).

10. Véhicule automobile selon la revendication 8 ou 9, **caractérisé en ce que** le troisième volume sonore final (E3) est supérieur ou égal au premier volume sonore de départ (ST1).

11. Véhicule automobile selon l'une des revendications 8 à 10, **caractérisé en ce que** le premier volume sonore final (E1) est égal au deuxième volume sonore de départ (ST2).

12. Véhicule automobile selon l'une des revendications 1 à 11, **caractérisé en ce que** le véhicule automobile (10) comprend au moins un dispositif de détection relié au dispositif de commande et agencé pour détecter des piétons dans l'environnement du véhicule automobile (10), le dispositif de détection transmettant au dispositif de commande les données de commande pour l'exécution d'une séquence lors de la détection d'un piéton.
